# EUROPEAN PATENT SPECIFICATION

(11) **EP 0 212 667 B1**
(45) Date of publication and mention of the grant of the patent: **29.12.1993**
(21) Application number: 86111883.4
(22) Date of filing: 27.08.1986
(51) Int. Cl.: H04L 1/08

(54) **Communication system with variably repeated transmission of data blocks**
Übertragungssystem mit variabler Übertragungswiederholung von Datenblöcken
Système de transmission avec répétition variable de blocs de données

(30) Priority: 28.08.1985 JP 189037/85; 31.10.1985 JP 245407/85
(43) Date of publication of application: 04.03.1987
(73) Proprietor: NEC CORPORATION, Tokyo (JP)
(72) Inventor: Miyazaki, Shinichi, Minato-ku Tokyo (JP)
(74) Representative: VOSSIUS & PARTNER

(56) References cited:
- EP-A- 0 084 389
- EP-A- 0 115 139
- INTERNATIONAL CONFERENCE ON COMMUNICATIONS, LINKS FOR THE FUTURE SCIENCE, SYSTEMS & SERVICES FOR COMMUNICATIONS, RAI Congress Centre, Amsterdam, 14th-17th May 1984, vol. 3, pages 1280-1284, IEEE, New York, US; C. HUITEMA: "An adaptative control protocol for MBIT/S satellite links"

## Description

The present invention relates to a radio communication system for exchanging radio signals between first and second stations wherein the same data block is repeatedly sent to a distant station to allow it to minimize the effect of transmission errors.

A conventional radio communication system employs a technique whereby the same data block is repeatedly transmitted to minimize the effect of transmission errors. However, the number of repetitions is constant. Thus, the number of repetitions may be insufficient under severely unfavorable conditions and may be excessively large under favorable conditions resulting in a low transmission efficiency.

In a known adaptative control protocol for satellite links (INTERNATIONAL CONFERENCE ON COMMUNICATIONS, LINKS FOR THE FUTURE SCIENCE, SYSTEMS & SERVICES FOR COMMUNICATIONS, RAI Congress Centre, Amsterdam, 14th-17th May 1984, vol. 3, pages 1280-1284, IEEE, New York, US; C. HUITEMA: "An adaptative control protocol for MBIT/S satellite links" *Page 1282), the bit error rate is the determining factor for the reception quality of the channel at a receiving site and a control signal is returned to the transmitting site to vary the number of copies of the signal to be sent. Since this determination is only made by analyzing coded signals, a substantial amount of time (which corresponds to the one-way transmission delay) will be introduced following the occurrence of a change in transmission quality of the channel. A full-duplex communication on a real-time basis is thus difficult to achieve.

EP-A-0 115 139 relates to a radio communication apparatus and system including a transmitter, a remotely located receiver, and means for controlling the output power of the transmitter. This system uses a field intensity detector, by which the signal level at each receiver is monitored, and a control signal, which is a function of the signal level, is transmitted back to the transmitting station to adjust the transmitter output power. The output of the field intensity detector is used to control transmission power in order to minimize fading defects.

It is an object of the invention to constantly monitor the quality of received signals and transmit a series of copies of the same message signal, wherein the number of copies in each series is variable in accordance with the detected reception quality.

This object is solved with the features of the claims. In particular, the radio communication system according to the present invenion constantly detects the field intensity of a carrier received from a distant station and transmits a control signal to the distant station to allow it to analyze the received copies of a message signal as many times as indicated by the control signal.

Preferably, a generator is provided to transmit a control signal indicative of the number of repetition cycles immediately prior to a series of signal blocks to allow a receiver station to analyze the signal blocks in repetition as many as specified by the control signal.

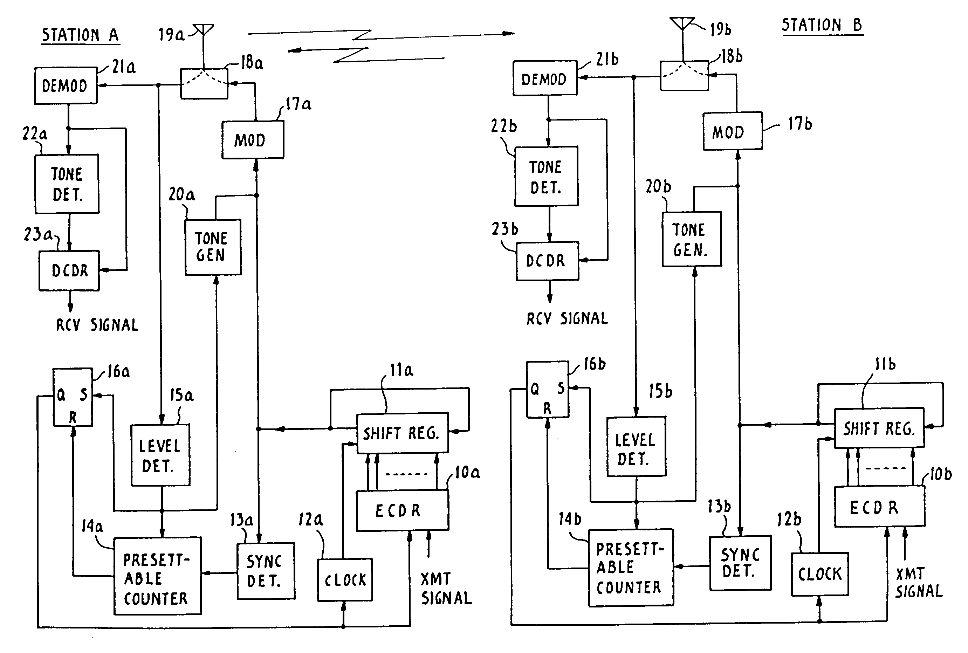

The present invention will be described in further detail with reference to the accompanying drawing in which a block diagram of a data transmission system according to an embodiment of the present invention is illustrated.

For purposes of illustration, the data transmission system of the invention comprises radio stations, or transceivers A and B of identical construction. The circuit blocks that constitute the transceivers A and B are designated by numerals with characters "a" and "b" appended thereto to respectively indicate transceivers A and B, and wherein corresponding parts are designated by same numerals. Because of the same construction, description is concerned only with the transceiver A. Transceiver A comprises a data encoder 10a which receives a signal to be transmitted to transceiver B from a source, not shown, and translates it into a series of digital data blocks headed by a frame sync. The data block generated by the encoder 10a is transferred in parallel to a shift register 11a which is shifted in response to a clock pulse from a clock source 12a. The data block stored into the shift register 11a is recirculated through it to transmit the same data block in repetition. The number of repetitions is determined by a circuit including a sync detector 13a, a presettable counter 14a and a signal detector 15a. Level detector 15a has its input connected to the receive end of a duplexer 18a through which a signal intercepted by an antenna 19a is applied. The field intensity level and/or signal-to-noise ratio of the intercepted signal is determined by the detector 15a. Detector 15a supplies the preset input of counter 14a with a control signal representative of the detected field intensity level and/or signal-to-noise ratio so that the counter is preset to a count value which is inversely proportional to the detected field intensity or signal-to-noise ratio. Namely, the preset count value represents a magnitude by which the radio frequency signal is affected during transmission from the transceiver B. Sync detector 13a is connected to the output of shift register 11a to supply a pulse to the counter 14a in response to the detection of a frame sync, so that counter 14a is incremented each time a given data block is repeatedly generated by the shift register 11a. A flip-flop 16a is provided which is set in response to the detection of the intensity level by the level detector 15a. This flip-flop is reset when the counter 14a reaches its preset value. Thus, flip-flop 16a is at a high output state for a longer period for weak signals and for a shorter period for strong signals. Clock source 12a and encoder 10a are enabled during the high output state of flip-flop 16a, so that the same data block is generated in a greater number of repetitions for lower levels of a signal received from the other station and in a smaller number of repetitions for higher levels of the signal.

Further included is a tone generator 20a which generates a tone signal whose frequency is variable as a function of the output of the detector 15a. This tone signal is combined with the output of shift register 11a so that the tone signal precedes a series of repeated data blocks. The combined signal is modulated upon a carrier by a modulator 17a and fed through the duplexer 18a to the antenna 19a and transmitted to the other station.

The signal intercepted by antenna 19a is also applied to a demodulator 21a where the original tone signal and digital data blocks are recovered and simultaneously fed to a tone detector 22a and a data decoder 23a. Tone detector 22a analyzes the frequency of the recovered tone signal and supplies the decoder 23a with a digital signal representative of the number of repetitions by which the transmission of a same data block is repeated. Decoder 23a provides translation of the digital signal in a process inverse to that of the encoder 10a to recover the original analog signal corresponding to each data block and the process is repeated in accordance with the number of repetitions.

With a varying intensity of signals intercepted by the antenna 19a, the sane data block is sent in a greater number of repetitions under unfavorable conditions to reduce errors and in a smaller number of repetition under favorable conditions to reduce transmission time.

In a further embodiment of the invention the tone generator may be replaced with a circuit that generates a digital control signal representative of the output of the detector 15a.

## Claims

1. A radio communications system for exchanging radio signals between first and second stations, wherein each of the stations comprises a receiver (19, 18, 21) for receiving copies of a message signal from the other station on a first carrier, control means (15, 20) for generating a control signal representing a magnitude by which the message signal received on the first carrier is affected, a copy generator (10-16) for generating copies of a message signal, a transmitter (17-19) for transmitting said generated control signal and copies to the other station on a second carrier, and means (22, 23) for analyzing the received copies, characterized in that said control means comprises a field intensity detector (15) for detecting the field intensity of said first carrier received by the station and means (20) for transmitting said control signal representing the number of said copies corresponding to the detected field intensity, in that the copy generator (10-16) generates said copies according to the output of the field intensity detector (15), and in that said analyzing means (23) repeatedly analyzes the received copies according to the control signal received from the other station.

2. A radio communications system as claimed in claim 1, characterized in that said control signal is transmitted immediately prior to the transmission of said copies.

3. A radio communications system as claimed in claim 1 or 2, characterized in that said control signal is a tone signal.

4. A radio communications system as claimed in any of claims 1 to 3, characterized in that said transmitter (17-19) includes:
an encoder (10) for transforming the transmit signal into a digitally coded signal;
register means (11) for storing the coded signal therein;
means (12, 13, 14, 16) for reading a signal out of the register means (11) for transmission to the other station repeatedly in accordance with the output of said field intensity detector means (15),
and in that said analyzing means (22, 23) comprises detector means (22) for detecting the control signal from the other station and a decoder for decoding a digitally coded signal from the other station repeatedly in accordance with the output of the detector means (22).

## Patentansprüche

1. Funkübertragungssystem zum Austauschen von Funksignalen zwischen einer ersten und zweiten Station, wobei jede der Stationen aufweist: einen Empfänger (19, 18, 21) zum Empfangen von Nachbildungen eines Nachrichtensignals von der anderen Station auf einem ersten Träger, eine Steuereinrichtung (15, 20) zum Erzeugen eines Steuersignals, das eine Größe aufweist, durch die das auf dem ersten Träger empfangene Nachrichtensignal beeinflußt wird, einen Kopiergenerator (10-16) zum Erzeugen von Nachbildungen eines Nachrichtensignals, einen Sender (17-19) zum Senden des erzeugten Steuersignals und der erzeugten Nachbildungen an die andere Station auf einem zweiten Träger und Einrichtungen (22, 23) zum Analysieren der empfangenen Nachbildungen, dadurch gekennzeichnet, daß die Steuereinrichtung aufweist: einen Feldstärkedetektor (15) zum Detektieren der Feldstärke des von der Station empfangenen ersten Trägers und eine Einrichtung (20) zum Übertragen des Steuersignals, das die Anzahl der Nachbildungen entsprechend der detektierten Feldstärke angibt, daß der Kopiergenerator (10-16) entsprechend dem Ausgangssignal des Feldstärkedetektors (15) die Nachbildungen erzeugt und daß die Analysiereinrichtung (23) die empfangenen Nachbildungen entsprechend dem von der anderen Station empfangenen Steuersignal wiederholt analysiert.

2. Funkübertragungssystem nach Anspruch 1, dadurch gekennzeichnet, daß das Steuersignal unmittelbar vor der Übertragung der Nachbildungen gesendet wird.

3. Funkübertragungssystem nach Anspruch 1 oder 2, dadurch gekennzeichnet, daß das Steuersignal ein Tonsignal ist.

4. Funkübertragungssystem nach einem der Ansprüche 1 bis 3, dadurch gekennzeichnet, daß der Sender (17-19) aufweist:
einen Codierer (10) zur Umwandlung des Sendesignals in ein digital codiertes Signal;
eine Registriereinrichtung (11) zum Speichern des codierten Signals;
Einrichtungen (12, 13, 14, 16) zum wiederholten Ausgeben eines Signals aus der Registriereinrichtung (11) zur Übertragung an die andere Station entsprechend dem Ausgangssignal des Feldstärkedetektors (15),
und daß die Analysiereinrichtung (22, 23) eine Detektoreinrichtung (22) zum Detektieren des Steuersignals von der anderen Station und einen Decodierer zum wiederholten Decodieren eines digital codierten Signals von der anderen Station entsprechend dem Ausgangssignal der Detektoreinrichtung (22) aufweist.

## Revendications

1. Système de télécommunications radio permettant d'échanger des signaux radio entre une première et une deuxième station, où chacune des stations comprend un récepteur (19, 18, 21) servant à recevoir des copies d'un signal de message de la part de l'autre station sur une première porteuse, un moyen de commande (15, 20) servant à produire un signal de commande qui représente l'amplitude par laquelle le signal de message reçu sur la première porteuse est affectée, un générateur de copies (10-16) servant à produire des copies d'un signal de message, un émetteur (17-19) servant à émettre ledit signal de commande produit et lesdites copies produites à destination de l'autre station sur une deuxième porteuse, et un moyen (22, 23) servant à analyser les copies reçues, caractérisé en ce que ledit moyen de commande comprend un détecteur d'intensité de champ (15) servant à déterminer l'intensité de champ de ladite première porteuse reçue par la station et un moyen (20) servant à émettre ledit signal de commande qui représente le nombre desdites copies correspondant à l'intensité de champ détectée, en ce que le générateur de copies (10-16) produit lesdites copies en fonction du signal de sortie du détecteur d'intensité de champ (15), et en ce que ledit moyen d'analyse (23) analyse de façon répétée les copies reçues en fonction du signal de commande reçu de la part de l'autre station.

2. Système de télécommunications radio selon la revendication 1, caractérisé en ce que ledit signal de commande est émis immédiatement avant l'émission desdites copies.

3. Système de télécommunications radio selon la revendication 1 ou 2, caractérisé en ce que ledit signal de commande est un signal à fréquences vocales.

4. Système de télécommunications radio selon l'une quelconque des revendications 1 à 3, caractérisé en ce que ledit émetteur (17-19) comporte :
un codeur (10) servant à transformer le signal d'émission en un signal numériquement codé ;
un moyen constituant un registre (11) qui sert à emmagasiner le signal codé ;
un moyen (12, 13, 14, 16) servant à lire un signal dans le moyen formant un registre (11) pour l'émettre à destination de l'autre station de façon répétée en fonction du signal de sortie dudit moyen détecteur d'intensité de champ (15),
et en ce que ledit moyen d'analyse (22, 23) comprend un moyen détecteur (22) servant à détecter le signal de commande venant de l'autre station et un décodeur servant à décoder un signal numériquement codé venant de l'autre station de façon répétée en fonction du signal de sortie du moyen détecteur (22).
